# EUROPEAN PATENT SPECIFICATION

(11) **EP 3 367 199 B1**
(45) Date of publication and mention of the grant of the patent: **06.05.2020**
(21) Application number: 16868904.0
(22) Date of filing: 24.11.2016
(51) Int. Cl.: G05D 1/02, B25J 11/00, B25J 9/16, B25J 19/02

(54) **MOVING ROBOT AND METHOD OF CONTROLLING THE SAME**
MOBILER ROBOTER UND STEUERUNGSVERFAHREN DAFÜR
ROBOT MOBILE ET PROCÉDÉ DE COMMANDE POUR CE DERNIER

(30) Priority: 26.11.2015 KR 20150166310
(43) Date of publication of application: 29.08.2018
(73) Proprietor: Samsung Electronics Co., Ltd., Suwon-si, Gyeonggi-do 16677 (KR)
(72) Inventor: YOON, Suk June, Seoul 01742 (KR); KWAK, No San, Suwon-si, Gyeonggi-do 16663 (KR); KIM, Bo Young, Incheon 21997 (KR); ROH, Kyung Shik, Seongnam-si, Gyeonggi-do 13588 (KR); PARK, Soon Yong, Bucheon-si, Gyeonggi-do 14414 (KR); LEE, So Hee, Seoul 06284 (KR); CHOI, Min Yong, Suwon-si, Gyeonggi-do 16548 (KR)
(74) Representative: Grootscholten, Johannes A.M.
(86) International application number: PCT/KR2016/013630
(87) International publication number: WO 2017/091008

(56) References cited:
- KR-A- 20110 047 797
- KR-A- 20120 047 137
- KR-A- 20140 038 239
- KR-B1- 100 988 568
- KR-B1- 101 371 038
- US-A1- 2009 276 092
- US-A1- 2012 114 174
- US-A1- 2012 155 775

## Description

### [Technical Field]

The present invention relates to a moving robot and a method of controlling the same, and more particularly, to a technique for sensing an obstacle ahead of a moving robot using a three-dimensional (3D) space recognition sensor, and recognizing a location of the moving robot and creating a map using information regarding the sensed obstacle.

### [Background Art]

In the past, robots were generally developed for an industrial technology field and used as part of factory automation. However, recently, as the number of fields of application of robots is increasing, robots for medical purposes, robots for aerospace purposes, etc. are being developed. Furthermore, moving robots for standard households are being developed.

Moving robots refer to robots capable of performing an operation according to a command from a user while autonomously moving through a desired area without the user's manipulation. Examples of the moving robots include cleaning robots, telepresence robots, security robots, etc.

Recently, application technologies using moving robots are being developed. For example, as moving robots having network functions are being developed, a function of giving a control command to a moving robot even when the moving robot is far from a user, a function of monitoring ambient conditions, etc. are being developed. Furthermore, technology for recognizing a location of a moving robot and planning a path of movement of the moving robot by employing a camera or various types of sensors, such as an obstacle sensing sensor, in the moving robot is being developed.

Accordingly, for free movement of moving robots, it is necessary to precisely track locations of the moving robots and to create a map regarding an area through which the moving robots are moving. This is because a path of movement of a moving robot can be planned and work such as communication with a human being can be performed when an accurate map is created.

Generally, a location of a moving robot is estimated and a map is created using an inertia measurement unit (IMU) and odometry. At the present time, simultaneous localization and mapping (SLAM) technology has been mainly used to estimate a location of a moving robot in real time and create a map.

Here, reference is made to US 2012/0114174 A1, which is considered to constitute the closest known prior-art and discloses an apparatus and corresponding method comprising Simultaneous Localization and Mapping (SLAM) in conjunction Iterative Closest Point (ICP) to generate a voxel map. The invention according to the present application may be distinguished from US 2012/0114174 A1 by at least features specified in characterising portions of appended independent claims. Further, reference is made to US-2009/276092, which relates to disregarding dynamic objects when building a map.

### [Disclosure]

### [Technical Problem]

However, in the related art, an image processing algorithm and a three-dimensional (3D) coordinate extraction algorithm are additionally necessary to implement simultaneous localization and mapping (SLAM), an additional obstacle sensor is necessary to sense an obstacle, and the amount of calculation for management of obstacles, geographical features, etc. is large. In addition, a map should be additionally created to plan a path of movement of a moving robot, and sensing an obstacle, estimating a location of the moving robot, and planning a path of movement of the moving robot are independently performed, thereby increasing the amount of calculation and complicating the calculation.

### [Technical Solution]

To address the above-described problems, the present invention is directed to more efficiently estimating a location of a moving robot and creating a map by sensing an obstacle, estimating the location of the moving robot, and creating a map using a three-dimensional (3D) space recognition sensor.

### [Advantageous Effects]

The present invention is advantageous in that sensing an obstacle, recognizing a location of a moving robot, creating a map, and planning a path of movement of the moving robot may be simultaneously performed and thus an additional map is not necessary to create the map, and an obstacle can be identified without an additional obstacle sensor. A region identified as an obstacle is not considered in recognizing the location of the moving robot and creating a map, thereby more quickly identifying the location of the moving robot and creating a map. Furthermore, the precision of a map may be improved due to use of a three-dimensional (3D) image, when compared to existing two-dimensional (2D) systems, and map-based robot services may be thus provided using the 3D image.

### [Description of Drawings]

FIG. 1 is a diagram illustrating an overall structure of a moving robot system according to an embodiment of the present invention.
FIG. 2 is a diagram schematically illustrating the appearance of a moving robot according to an embodiment of the present invention.
FIG. 3 is a diagram schematically illustrating a structure of a robot capable of performing localization and map-building, according to the related art.
FIG. 4 is a control block diagram of the moving robot capable of performing localization and map-building, according to an embodiment of the present invention.
FIG. 5 is a diagram illustrating a general structure of a general 3D space recognition sensor (a 3D laser range finder sensor) corresponding to a component of the capturing unit.
FIG. 6 is a diagram illustrating a general structure of a 3D depth sensor corresponding to a component of the capturing unit.
FIG. 7 is a flowchart of a method of estimating a current location of the moving robot and an order of creating a map, according to an embodiment of the present invention.
FIG. 8 is a diagram illustrating a moving robot and obstacles located in an area that the moving robot may sense.
FIG. 9 is a flowchart of an algorithm for a method of sensing an obstacle in a space of FIG. 8, the method performed by the moving robot.
FIG. 10 illustrates a method of determining a reference plane by a geometric method.
FIG. 11 is a graph illustrating actually measured data.
FIG. 12 is a diagram illustrating an approximated result obtained by a minimum square method.
FIG. 13 is a diagram illustrating an approximated result obtained by the RANSAC method.
FIG. 14 is a diagram illustrating a plane determined by the RANSAC method.
FIG. 15 is a diagram illustrating a method of sensing a moving obstacle according to another embodiment.
FIG. 16 is a diagram illustrating a case in which the moving robot cannot obtain a 3D image.
FIG. 17 is a diagram illustrating calculating second location information of the moving robot using a particle method.
FIG. 18 is a diagram illustrating calculating second location information of the moving robot on the basis of first location information of the moving robot and using a particle filter method.
FIG. 19 is a flowchart of a method of correcting a map according to an embodiment of the present invention.
FIG. 20 is a diagram illustrating loop closure, in which an actual path of movement of the moving robot and an estimated path of movement of the moving robot are illustrated.
FIG. 21 is a diagram illustrating a final map obtained according to the present invention.

### [Modes of the Invention]

Embodiments set forth herein and structures illustrated in the drawings are merely examples of the present invention, and various modified examples which may replace the embodiments and the drawings would have been made at the filing date of the present application.

The same reference numerals or signs used in the drawings of the present specification represent parts or components implementing substantially the same functions.

The terms used herein are merely used to describe embodiments and are not intended to restrict the scope of the invention disclosed herein. As used herein, the singular forms "a," "an" and "the" are intended to include the plural forms as well, unless the context clearly indicates otherwise.

It will be understood that the terms "comprise," "include," "have," etc. when used herein, specify the presence of stated features, integers, steps, operations, elements, components, and/or groups thereof but do not preclude the presence or addition of one or more other features, integers, steps, operations, elements, components, and/or groups thereof.

It will be further understood that, although the terms "first," "second," "third," etc., may be used herein to describe various elements, these elements should not be limited by these terms. These terms are only used to distinguish one element from another element. For example, a first element could be termed a second element without departing from the scope of the present invention. Similarly, a second element could be termed a first element. As used herein, the term "and/or" includes any and all combinations of one or more of the associated listed items.

Hereinafter, embodiments of the present invention will be described in detail with reference to the accompanying drawings.

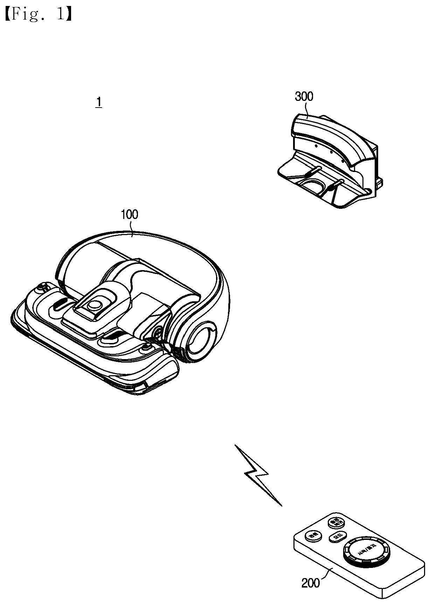

FIG. 1 is a diagram illustrating an overall structure of a moving robot system according to an embodiment of the present invention.

In FIG. 1, a moving robot system 1 according to an embodiment of the present invention may include a moving robot 100 configured to perform a work while autonomously moving within a certain region, a device 200 separated from the moving robot 100 and configured to remotely control the moving robot 100, and a charging station 300 separated from the moving robot 100 and configured to charge a battery of the moving robot 100.

The moving robot 100 is a device configured to receive a control command for control of the device 200 from a user and perform an operation corresponding to the control command, includes a chargeable battery and an obstacle sensor for avoiding an obstacle during movement, and may thus perform an operation while autonomously moving within a work area.

The moving robot 100 may further include a camera or various types of sensors to identify surroundings thereof. Thus, the moving robot 100 is capable of identifying a location thereof even when information regarding the surroundings of the moving robot 100 is not obtained in advance, and performing localization and map-building to create a map on the basis of information regarding the surroundings.

The device 200 is a remote control device configured to wirelessly transmit a control command to control movement of the moving robot 100 or perform an operation of the moving robot 100. Thus, the device 200 may be a cellphone or a personal communication service (PCS) phone, a smart phone, a personal digital assistants (PDA), a portable multimedia player (PMP), a laptop computer, a digital broadcasting terminal, a netbook, a tablet personal computer (PC), a navigation system, or the like, but is not limited thereto and may be any device capable of wirelessly transmitting a control command to perform an operation of the moving robot 100.

In addition, the device 200 may include various types of devices capable of implementing various functions using various application programs, such as a digital camera or a camcorder having wire/wireless communication functions.

Alternatively, the device 200 may be a general remote control having a simple structure. Generally, a remote control transmits signals to or receives signals from the moving robot 100 through infrared data association (IrDA).

Furthermore, the device 200 may transmit wireless communication signals to or receive it from the moving robot 100 according to various methods, such as radio frequency (RF), wireless fidelity (Wi-Fi), Bluetooth, ZigBee, near-field communication (NFC), and ultra-wide band (UWB) communication. Any method through which wireless communication signals can be exchanged between the device 200 and the moving robot 100 may be used.

The device 200 may include a power button for powering on or off the moving robot 100, a charge return button for instructing the moving robot 100 to return to the charging station 300 so as to charge the battery of the moving robot 100, a mode button for changing a control mode of the moving robot 100, a start/stop button for starting, canceling, and confirming the control command to start or stop an operation of the moving robot 100, a dial, etc.

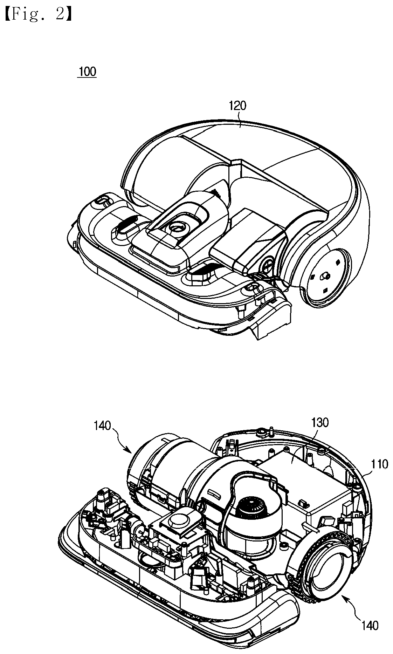

The charging station 300 is configured to charge the battery of the moving robot 100, and may include a guide member (not shown) to guide docking of the moving robot 100. The guide member may include a connection terminal (not shown) to charge a power unit 130 shown in FIG. 2 included in the moving robot 100.

FIG. 2 is a diagram schematically illustrating the appearance of a moving robot according to an embodiment of the present invention.

Referring to FIG. 2, a moving robot 100 may include a main body 110 forming the appearance of the moving robot 100, a cover 120 configured to cover an upper portion of the main body 110, the power unit 130 configured to supply driving power for driving the main body 110, and drivers 140 configured to move the main body 110.

The main body 110 forms the appearance of the moving robot 100 and supports various components installed in the moving robot 100.

The power unit 130 may include a battery electrically connected to the drivers 140 and various types of loads for driving the main body 110 to supply driving power thereto. The battery may be a rechargeable secondary battery, and is supplied and charged with power from the charging station 300 when the main body 110 completes an operation and is then coupled to the charging station 300.

The power unit 130 checks residual power of the battery, and is supplied and charged with charging current from the charging station 300 when it is determined that the residual power of the battery is insufficient.

A caster wheel of which an angle of rotation is changed according to a state of a plane of a floor on which the moving robot 100 is moving may be installed at the front of the main body 110 of the moving robot 100. The caster wheel supports the moving robot 100 to stabilize a posture of the moving robot 100 and prevent the moving robot 100 from falling during movement. The caster wheel may be in the form of a roller or caster.

The drivers 140 may be provided at opposite sides of a center portion of the main body 110 to permit movement, e.g., forward movement, backward movement, rotational movement, etc., of the main body 110 while work is performed.

Both the drivers 140 are rotated in a forward or backward direction such that the moving robot 100 moves forward or backward or rotates when a specific command is given from a user or during autonomous movement. For example, both the drivers 140 are rotated in the forward or backward direction such that the moving robot 100 moves forward or backward. The right driver 140 may be rotated in the forward direction during backward rotation of the left driver 140 such that the moving robot 100 is rotated in forward and left directions. The left driver 140 may be rotated in the forward direction during backward rotation of the right driver 140 such that the moving robot 100 is rotated in forward and right directions.

A general structure and operating principle of the moving robot 100 have been described above. Localization and map-building performed by the moving robot 100 according to the related art will be briefly described below, and features of the present invention to address problems of the related art will be described in detail below.

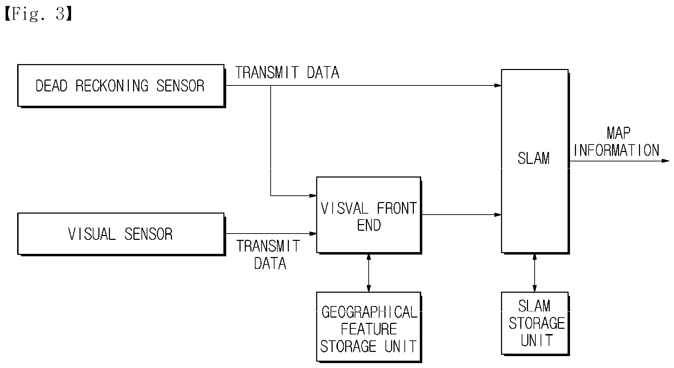

FIG. 3 is a diagram schematically illustrating a structure of a robot capable of performing localization and map-building, according to the related art.

At the present time, generally, a location of a moving robot 100 is recognized and a map is created by the SLAM method. SLAM stands for simultaneous localization and mapping, and is a technique for creating a map while estimating a location of a moving robot in real time.

Referring to FIG. 3, in the case of the moving robot according to the related art, information regarding a location of the moving robot and information regarding an obstacle are obtained using a visual sensor and a dead reckoning sensor, and SLAM is performed using this information.

However, in the related art, an image processing algorithm and a three-dimensional (3D) coordinate extraction algorithm are additionally needed to perform SLAM, an obstacle sensor is additionally needed to sense an obstacle, and the amount of calculation for management of obstacles, geographical features, etc. is large. Furthermore, an additional map should be built to plan a path of movement of a moving robot.

That is, sensing an obstacle, estimating a location of the moving robot, and planning the path of movement of the moving robot are independently performed, and thus calculation is large and complicated.

Accordingly, the present invention has been suggested to address this problem, and is characterized in that these processes are not independently performed but are simultaneously performed, thereby conveniently performing SLAM.

That is, the present invention employs a 3D sensor instead of the visual sensor and thus an obstacle may be directly sensed and SLAM may be performed without an additional obstacle sensor. An identified obstacle area is not considered when a location of a moving robot is estimated and a map is created, thereby more effectively performing SLAM.

Furthermore, the present invention suggests a system which does not additionally need map-building to plan a path, since SLAM may be performed using a 3D depth sensor, and which uses 3D navigation. Thus, the precision of a map may be higher than those in the existing 2D systems.

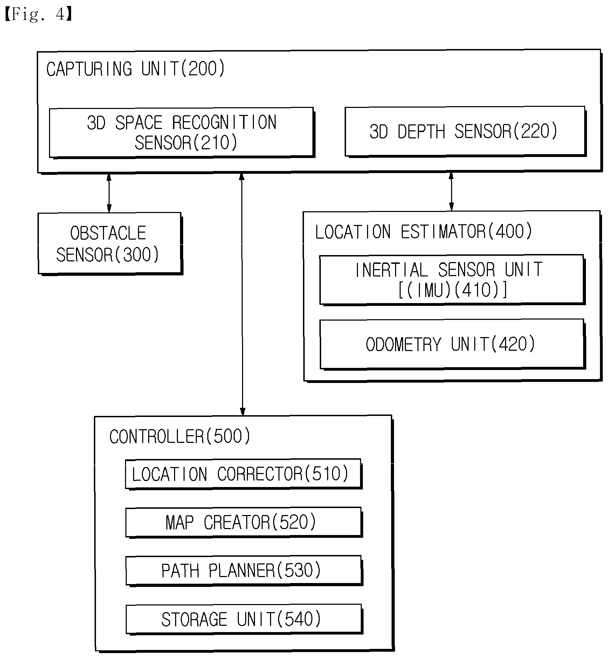

FIG. 4 is a control block diagram of the moving robot 100 capable of performing localization and map-building, according to an embodiment of the present invention.

Referring to FIG. 4, the moving robot 100 according to the present invention may include a capturing unit 200, an obstacle sensor 300, a location estimator 400, and a controller 500. The capturing unit 200 may include a 3D space recognition sensor 210 and a 3D depth sensor. The location estimator 400 may include an inertia sensor unit IMU 410 and an odometry unit 420. The controller 500 may include a location corrector 510, a map creator 520, a path planner 530, and a storage unit 540.

The capturing unit 200 is installed on a front surface of the moving robot 100 to capture an image of surroundings of the moving robot 100.

Thus, a camera and sensors for capturing an image of the surroundings of the moving robot 100 may be provided. Omnidirectional images of a space through which the moving robot 100 moves are captured in real time and provided to the obstacle sensor 300 and the location estimator 400.

The 3D space recognition sensor 210 may be KINECT (an RGB-D sensor), a time-of-flight (TOF) sensor (a structured light sensor), a stereo camera, or the like, but is not limited thereto and any device having substantially the same function as the 3D space recognition sensor 210 may be used.

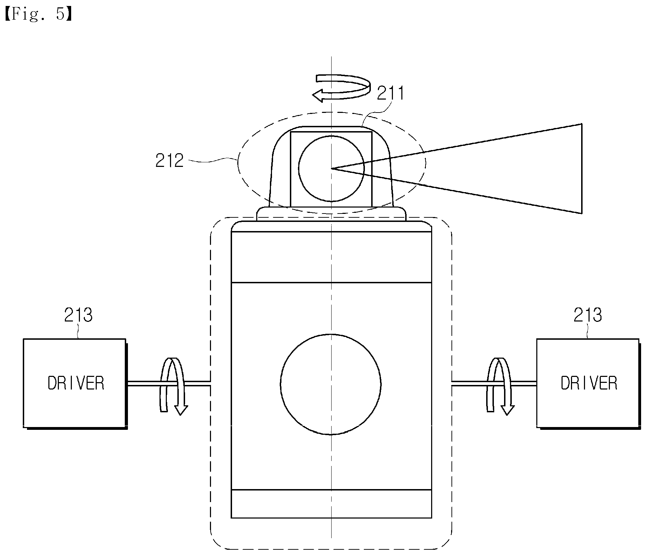

FIG. 5 is a diagram illustrating a general structure of a general 3D space recognition sensor (a 3D laser range finder sensor) corresponding to a component of the capturing unit 200.

The 3D space recognition sensor 210 is a sensor configured to sense signals obtained when light emitted from a light source is bumped against an object and returns, and perform a series of numerical calculation processes to determine a distance. Generally, the 3D space recognition sensor 200 may three dimensionally measure a distance through rotation, vertical vibration, and inter-pitch vibration of a reflector installed in a path in which light is emitted and incident.

Referring to FIG. 5, the 3D space recognition sensor 210 may include a laser range finder (LRF) structure 212 having a light source, a sensor, etc., a reflector 211 configured to reflect emitted light and incident light, a rotation means (not shown) configured to rotate the reflector 211, a vertical movement means (not shown) configured to control an inclination of the reflector 211, and a main body 214 configured to perform scanning by emitting light to be used to measure a distance by reflecting the light through the reflector 211 and receiving incidence light returning back from an object by reflecting the incidence light through the reflector 211. The 3D space recognition sensor 210 further includes a means for rotating the reflector 211, and an additional driver 213 configured to control an inclination of the reflector 211.

A plurality of 3D space recognition sensors 210 as described above may be mounted on an outer surface of the moving robot 100. A plurality of light sources, a plurality of sensors, and a plurality of reflectors 211 may be installed in each of the 3D space recognition sensors 210.

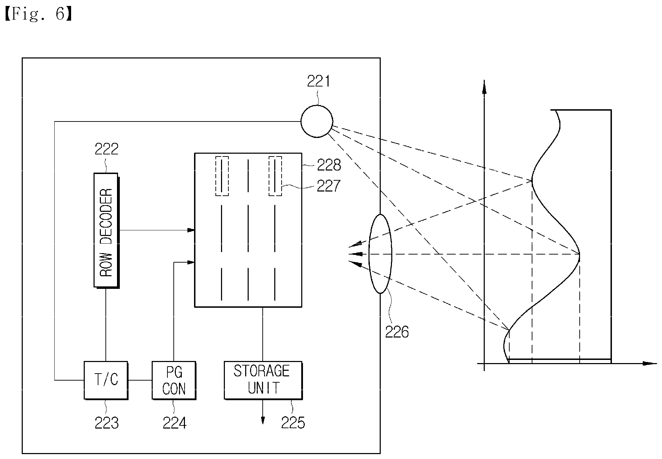

FIG. 6 is a diagram illustrating a general structure of a 3D depth sensor corresponding to a component of the capturing unit 200.

A 3D depth sensor 220 is a sensor which detects a depth image using infrared light. When infrared light is emitted from a light-emitting unit toward an object, the infrared light is reflected from the object and returns to a light-receiving unit. The distance between the sensor and the object, i.e., depth information (a depth image), may be obtained using a time difference between when the infrared light is emitted and when the infrared light is reflected. This method is generally called a time-of-flight (TOF) method (calculation performed using times when infrared light is received and reflected).

Referring to FIG. 6, the 3D depth sensor 220 includes a light-emitting part 221 which emits infrared light toward an object, a light-receiving part 226 which receives infrared light reflected from the object, a pixel array 228 in which a plurality of depth pixels (detectors or sensors) 227 are arranged, etc., and may further include a row decoder 222, a timing controller (T/C) 223 which controls time when infrared light is to be emitted, a photo gate controller (PG CON) 224, a storage unit 225 which stores information regarding captured depth images, etc.

Accordingly, the 3D depth sensor 220 may identify the distance between an object and a sensor on the basis of such information and thus a location of a robot and a map may be more accurately corrected using the identified distance. The correcting of the location of the robot and the map will be described below.

The obstacle sensor 300 senses objects near the moving robot 100 by analyzing information regarding an image obtained from the 3D space recognition sensor 210. Here, the obstacles may be understood to include all things, e.g., a door sill, furniture, a human being, an animal, etc., located above a specific plane within a range of movement of the moving robot 100. A method of recognizing an obstacle will be described in detail below.

The obstacle sensor 300 senses whether there is an obstacle by receiving signals reflected when light emitted from the 3D space recognition sensor 210 is bumped against the obstacle and returns, and determines whether the obstacle is near using distance measurement signals from the 3D space recognition sensor 200. In addition, the obstacle sensor 300 may transmit information regarding the sensed obstacle to the location estimator 400 and the controller 500.

The location estimator 400 includes the inertia sensor unit IMU 410 and the odometry unit 420, and estimates a current location of the moving robot 100 (hereinafter, referred to as 'first location information') using information received from the inertia sensor unit IMU 410 and the odometry unit 420 on the basis of information regarding the obstacle received from the obstacle sensor 300.

The inertia sensor unit IMU 410 may estimate a location of the moving robot 100 using an IMU.

The IMU is a sensor which senses an inertia force of a moving object and measures various types of information regarding motion of the moving object, such as acceleration, direction of velocity, and distance thereof, and is operated according to a principle that an inertia force applied to an inertia object is detected using acceleration applied to an object.

The IMU may be classified into an accelerometer and a gyroscope, and is operated by various methods such as a method using laser, a non-mechanical method, etc.

Thus, the inertia sensor unit IMU 410 may include an inertia sensor using an inertia input, e.g., an acceleration sensor, an inertia sensor, a geomagnetic sensor, or the like. The acceleration sensor may include at least one among a piezoelectric acceleration sensor, a capacitive acceleration sensor, a strain gauge type acceleration sensor, etc.

The odometry unit 420 may estimate a current location and orientation of the moving robot 100 using odometry information.

Odometry refers to a method of recognizing a location and orientation of the moving robot 100 and is also referred to as autonomous navigation.

A location and orientation of the moving robot 100 to which odometry is applied may be determined by obtaining information regarding velocity of the moving robot 100 by an odometer or a wheel sensor, obtaining information regarding the azimuth of the moving robot 100 by a magnetic sensor or the like, and then calculating a distance of movement from an initial location of the moving robot 100 to a next location thereof and information regarding a direction.

When odometry is used, a location of the moving robot 100 may be determined using only information generated through odometry without having to receive additional information from the outside and thus a structure of the system is relatively simple. Furthermore, through odometry, location information of the moving robot 100 can be obtained at a very high sampling speed and thus updated quickly. In addition, the precision of odometry is very high within a relatively short distance and costs thereof are low.

The location estimator 400 estimates the first location information of the moving robot 100 while excluding information regarding an obstacle area received from the obstacle sensor 300, based on information regarding the moving robot 100 obtained from the inertia sensor unit IMU 410 and the odometry unit 420. The reason why the obstacle area is excluded is because the moving robot 100 cannot pass through the obstacle area and thus the obstacle area may be excluded from a space which is a target of location estimation. When the obstacle area is excluded, a range of estimating the location of the moving robot 100 is decreased and thus the location of the moving robot 100 may be more efficiently estimated.

The location estimator 400 may transmit the first location information of the moving robot 100 estimated as described above to the controller 500.

The controller 500 may receive the information regarding the obstacle from the obstacle sensor 300 and the first location information of the moving robot 100 from the location estimator 400, and calculate more accurate current location information of the moving robot 100 (hereinafter referred to as 'second location information') by correcting the location of the moving robot 100 on the basis of the received information and first location information.

The controller 500 may create a map using the second location information of the moving robot 100 and the obstacle area, and plan a path of movement of the moving robot 100 based on the estimated second location information of the moving robot 100 and the created map.

Furthermore, the controller 500 may store the estimated location information of the moving robot 100 and the created map.

Thus, the controller 500 may include the location corrector 510 which calculates the second location information of the moving robot 100, the map creator 520 which creates a map on the basis of received information regarding an obstacle and the second location information of the moving robot 100, the path planner 530 which plans a path of movement of the moving robot 100 on the basis of the second location information of the moving robot 100 and the created map, and the storage unit 540 which stores the location information of the moving robot 100 and the created map.

The location corrector 510 may more exactly correct the received first location information of the moving robot 100.

The reason why the estimated first location information of the moving robot 100 is corrected is because odometry is designed to calculate a location and orientation of an object through an integral calculus and thus an increase in a distance of movement may result in an increment in measured errors, thereby greatly increasing the difference between an actual location of the moving robot 100 and an estimated location thereof.

Furthermore, information obtained via the inertia sensor unit IMU 410 contains errors and thus the first location information should be corrected to more exactly estimate the location of the moving robot 100.

Thus, the location corrector 510 may calculate the second location information of the moving robot 100 by comparing information regarding a depth image detected by the 3D depth sensor 200 with a previous map stored in the storage unit 540 and correcting the first location information of the moving robot 100.

In a method of correcting the location of the moving robot 100, the second location information of the moving robot 100 is calculated by distributing particles around the first location information of the moving robot 100, calculating a matching score corresponding to each of the particles, and correcting the location of the moving robot 100 to a most probable location.

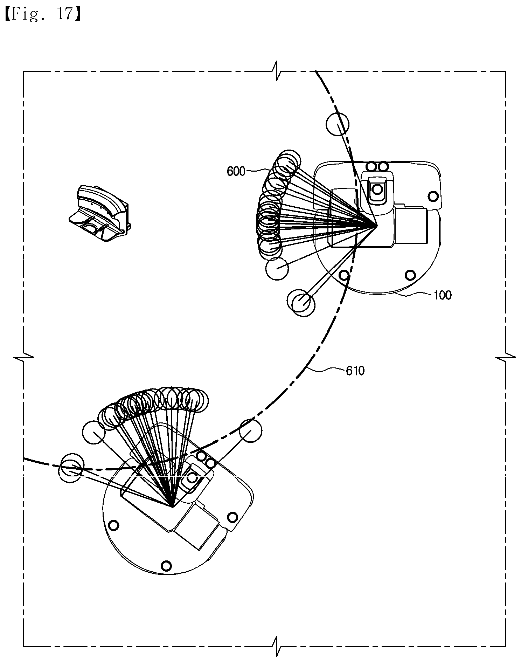

The location corrector 510 corrects the location of the moving robot 100 according to a probability-based filtering method and thus may include a particle filter. The location corrector 510 may include at least one among a Kalman filter, an extended Kalman filter (EKF), an unscented Kalman filter (UKF), an information filter, a histogram filter, etc. which has substantially the same function as the particle filter. The method of correcting the location of the moving robot 100 and the particle filter will be described in detail with reference to FIG. 17 below.

The map creator 520 may create a map using the second location information of the moving robot 100 calculated by the location corrector 510, information regarding an obstacle sensed by the obstacle sensor 300, and a 3D image obtained from the 3D space recognition sensor 210.

The map creator 520 may create a map while excluding an obstacle area sensed by the obstacle sensor 300. The region identified as the obstacle has already been sensed as the obstacle and is thus not used in creating the map. Accordingly, the map may be more efficiently created.

In order to increase the accuracy of a map created by SLAM, the map creator 520 may correct distortions of the map, i.e., perform pose graph optimization. This is because, when particle filter-based SLAM is used, a map may be distorted when a map building space is large.

Thus, in order to prevent distortions of the map, the map creator 520 updates a path of movement of the moving robot 100 (pose graph) at certain time intervals while scanning an image of a location of the moving robot 100 and a 3D image of the moving robot 100. When closure of the path of movement of the moving robot 100 (loop closure) is detected on the basis of these images, the pose graph is optimized to minimize distortions of the map. This process will be described in detail below.

The map creator 520 may detect loop closure using at least one among Wi-Fi, a 3D image, visual data, and a docking station, and include Wi-Fi communication modules for performing this process and various types of devices for the docking station.

The storage unit 540 may store general information of the moving robot 100, i.e., a map regarding an environment in which the moving robot 100 operates, an operating program for operating the moving robot 100, a running pattern of the moving robot 100, location information of the moving robot 100 and information regarding an obstacle which are obtained during movement of the moving robot 100, etc.

The above-described information may be transmitted to the map creator 520 when the pose graph is optimized by the map creator 520.

Accordingly, the storage unit 540 may include a nonvolatile memory device such as a read-only memory (ROM), a programmable ROM (PROM), an erasable programmed ROM (EPRM), or a flash memory, a volatile memory such as a random access memory (RAM), or a storage medium such as a hard disc, a card type memory (e.g., an SD or XD memory), or an optical disc, to store various types of information. However, the storage unit 160 is not limited thereto and any other various storage media which a designer may consider may be used.

The structure of the moving robot 100 according to the present invention has been described above. Algorithms for recognizing a location of the moving robot 100 and creating a map according to the present invention will be described below.

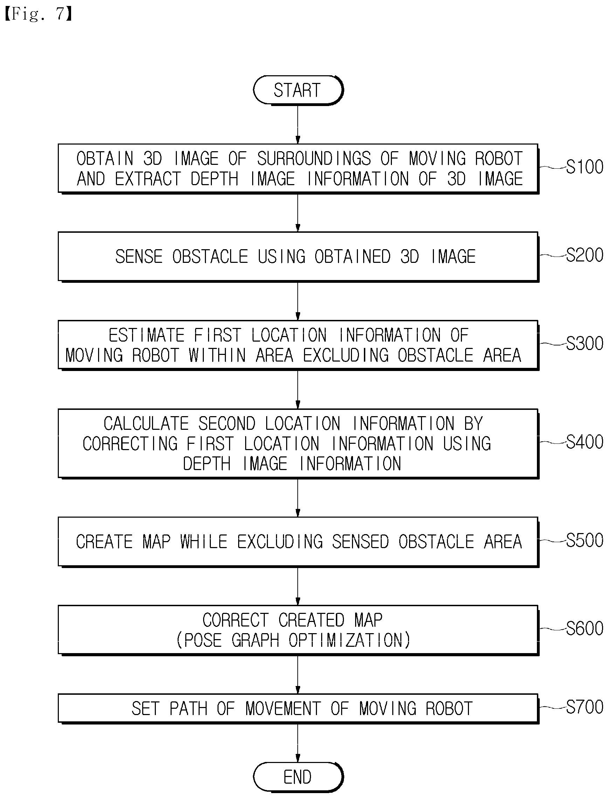

FIG. 7 is a flowchart of a method of estimating a current location of the moving robot 100 and an order of creating a map, according to an embodiment of the present invention.

When the moving robot 100 moves, the moving robot 100 obtains a 3D image by capturing an image of surroundings thereof using a 3D space recognition sensor, and at the same time, extracts a depth image of the 3D image (SI00).

The 3D image may be obtained in real time and may be obtained by freely capturing images of a lateral view and a rear view of the moving robot 100, as well as an image of a front view of the moving robot 100.

At the same time, the 3D depth sensor 220 of the capturing unit 200 may capture an image of an area photographed by the 3D space recognition sensor and detect information regarding a depth image of this area.

The information regarding the depth image may be used to correct estimated first location information of the moving robot 100 and calculate second location information of the moving robot 100.

When the 3D image is obtained, the 3D image is analyzed to sense an obstacle located near the moving robot 100 (S200).

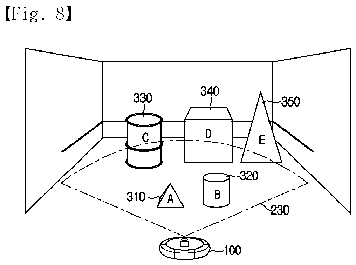

In a method of sensing an object, an obstacle area may be identified by dividing a bottom of an obtained 3D image and recognizing only objects located above a specific plane. A process of sensing and identifying the obstacle will be described in detail with reference to FIGS. 8 to 16 below.

When the obstacle area is sensed, a current location of the moving robot 100, i.e., the first location information of the moving robot 100, is estimated using odometry and the IMU while excluding the sensed obstacle area (S300).

As described above, the reason why the obstacle area is excluded is because the moving robot 100 cannot move through an area in which an obstacle exists. Thus, the location of the moving robot 100 may be more quickly estimated by designating the obstacle area as a region through which the moving robot 100 cannot be located at an initial stage.

When the first location information of the moving robot 100 is estimated in S300, the current location of the moving robot 100 is corrected using the 3D depth image information. That is, the second location information of the moving robot 100 which is more accurate than the first location information of the moving robot 100 is calculated (S400).

As described above, the current location of the moving robot 100 is corrected by distributing particles around the estimated first location information of the moving robot 100, calculating a matching score corresponding to each of the particles, and correcting the location of the moving robot 100 to a highly probable location. This method will be described in detail with reference to FIG. 17 below.

When the second location information of the moving robot 100 is calculated, a map of an area through which the moving robot 100 is movable, excluding the sensed obstacle area, is created (S500).

Generally, this process called SLAM may be performed on the basis of an image obtained from the 3D space recognition sensor 210 and the second location information of the moving robot 100.

When the map is created in S500, a map correction work (pose graph optimization) may be performed to correct distortions of the map (S600).

As described above, in particle filter-based SLAM, a map may be distorted when a map-building space is large and thus performing of the map correction work is necessary.

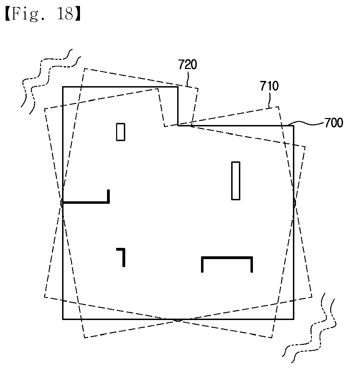

When movement of the moving robot 100 starts, a path of movement of the moving robot 100 (pose graph) is updated by scanning the location of the moving robot 100 and a 3D image of the surroundings of the moving robot 100. When closure of the path of movement of the moving robot 100 (loop closure) is detected based on this information, pose graph optimization is performed to minimize distortions of the map. This process will be described in detail with reference to FIGS. 18 to 20 below.

When distortions of the map are corrected and the map is completed, an optimized path of movement of the moving robot 100 is planned using the second location information of the moving robot 100 and the completed map (S700).

The estimation of the location of the moving robot 100 and the creation of the map according to the present invention have been briefly described above with reference to FIG. 7. Specific operations will be described with reference to the drawings below.

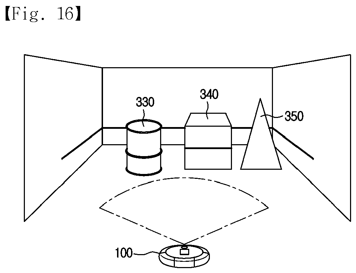

FIGS. 8 to 15 are diagrams illustrating a method of sensing an obstacle, i.e., S200, in detail. FIGS. 16 and 17 are diagrams illustrating estimating a location of the moving robot 100 (S300 and S400). FIGS. 18 to 21 are diagrams illustrating correcting a created map (S600) in detail.

FIG. 8 is a diagram illustrating a moving robot 100 and obstacles located in an area that the moving robot 100 may sense.

As described above, obstacles may be understood to mean all things e.g., a door sill, furniture, a human being, an animal, etc., located above a specific plane within a range of movement of the moving robot 100.

The reason why a criterion for an obstacle is determined that objects having a height greater than or equal to that of a specific plane are obstacles is because, even when small objects which do not interrupt movement of the moving robot 100 are sensed as obstacles, the amount of data is large to prevent the movement of the robot 100 and create a map and thus it takes a lot of time.

Referring to FIG. 8, five objects A, B, C, D, and E are ahead of the moving robot 100 located in a specific area. All the five objects are located within a range that the 3D space recognition sensor 210 may recognize. The drawings to be described below will be described with respect to the objects A, B, C, D, and E of FIG. 8.

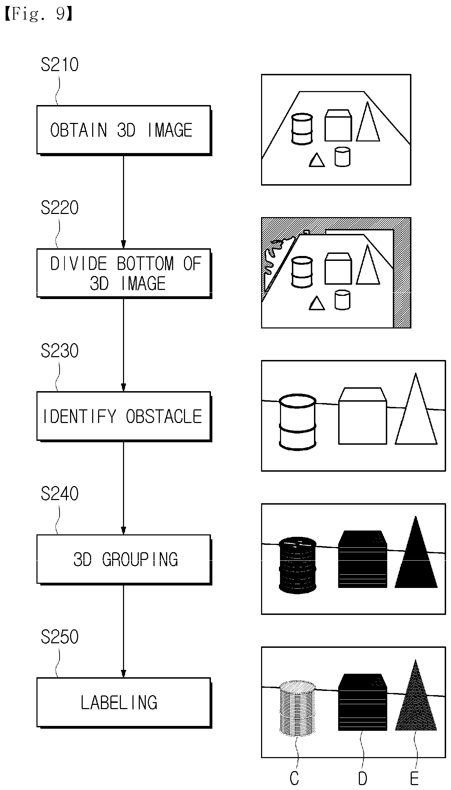

FIG. 9 is a flowchart of an algorithm for a method of sensing an obstacle in a space of FIG. 8, the method performed by the moving robot 100.

The moving robot 100 obtains a 3D image of a front view of the moving robot 100 using the 3D space recognition sensor 210 and identifies all objects included in the obtained 3D image (S210).

However, all identifiable objects are not obstacles as described above and thus the moving robot 100 identifies, as obstacles, only objects corresponding to obstacles using a bottom division method (S220).

The bottom division method is a method of setting a specific plane as a reference point and determining, as obstacles, only objects having a height greater than that of the specific plane among all objects identified by the moving robot 100.

Here, there are two available bottom division methods: a method using geometric information and a random sample consensus (RANSAC) method, as will be described in detail below.

When a reference plane is determined by the bottom division method, only obstacles selected according to the reference plane are determined as obstacles (S230).

Next, the objects determined as obstacles are expressed using point cloud and then information regarding the obstacles is obtained by performing 3D grouping and labeling to recognize the objects as the same obstacle (S240 and S250).

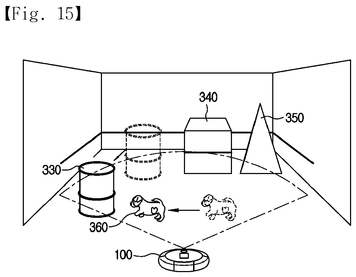

3D grouping and labeling are performed to easily track moving obstacles, since obstacles are not all static and may be dynamic. Trackers may be used to track dynamic obstacles. Dynamic obstacles will be described with reference to FIG. 15 below.

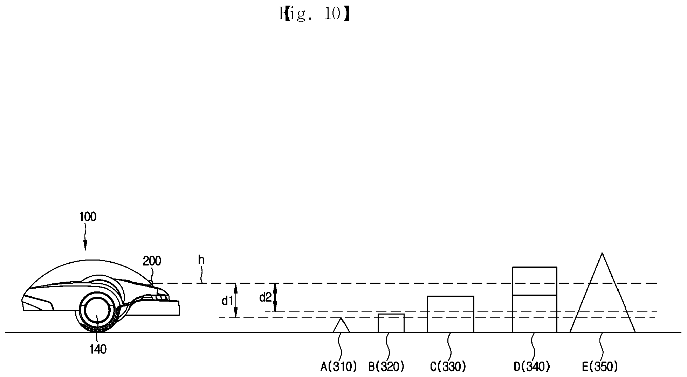

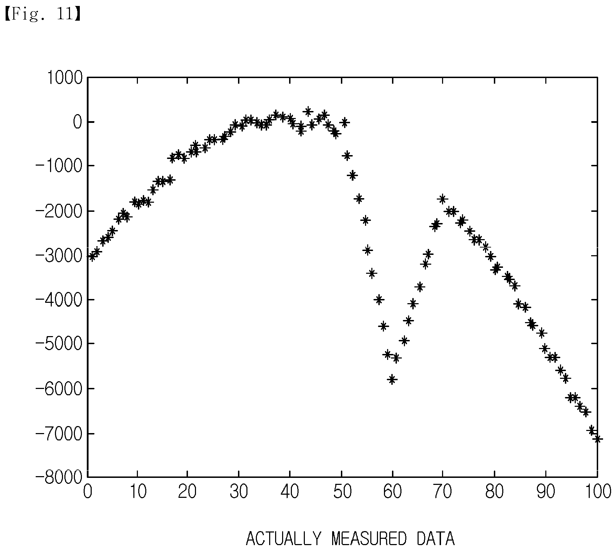

FIGS. 10 to 14 are diagrams illustrating the bottom division method, i.e., S220. FIG. 10 illustrates a method of determining a reference plane by a geometric method. FIGS. 11 to 14 are diagrams for explaining a reference plane determined by the RANSAC method.

FIG. 10 is a perspective view of a moving robot 100 and an obstacle, when viewed from a side of FIG. 9.

Referring to FIG. 10, the moving robot 100 may sense objects ahead thereof via a 3D space recognition sensor 200 installed at a front of the moving robot 100. Here, a geometric method is a method of designating a specific height with respect to the 3D space recognition sensor 200 and setting a plane corresponding to the specific height to a specific plane.

In FIG. 10, when there is a horizontal line h corresponding to a location at which the 3D space recognition sensor 210 exists, a plane spaced a certain distance d1 or d2 downward from the horizontal line h may be a reference plane as a criterion for determining an obstacle.

When a reference plane for determination of an obstacle is set to be at a height spaced the distance d1 downward from the horizontal line h, a height of an object A 310 is less than that of the reference plane and the object A 310 is thus not recognized as an obstacle. However, heights of objects B 320, C 330, D 340, and E 350 are greater than that of the reference plane and thus the objects B 320, C 330, D 340, and E 350 may be recognized an obstacles.

When a reference plane for determination of an obstacle is set to be at a height spaced the distance d2 downward from the horizontal line h, the objects A 310 and B 320 are located below the reference plane and thus are not recognized as obstacles. However, the heights of the objects C 330, D 340, and E 350 are greater than that of the reference plane and thus the objects 330, D 340, and E 350 are recognized as obstacles.

Generally, the horizontal line h may be set to be at a height at which objects which do not interrupt movement of the moving robot 100 are not recognized as obstacles, and may be set to be at a height that a user desires.

FIGS. 11 to 14 are diagrams illustrating the RANSAC method which is another method of setting a plane for sensing an obstacle.

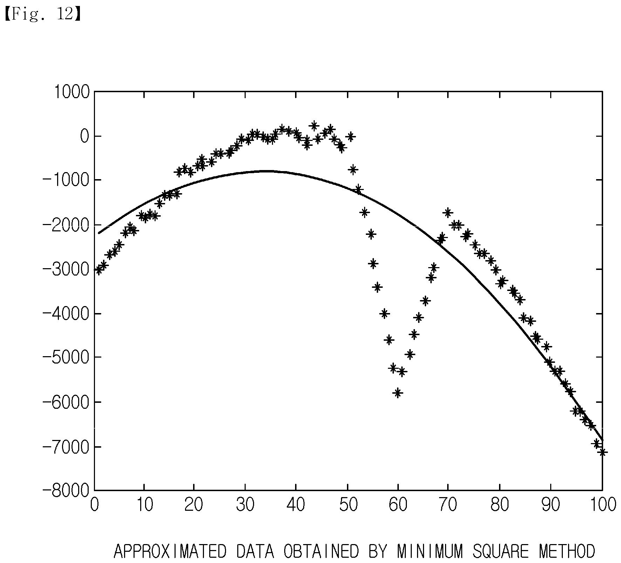

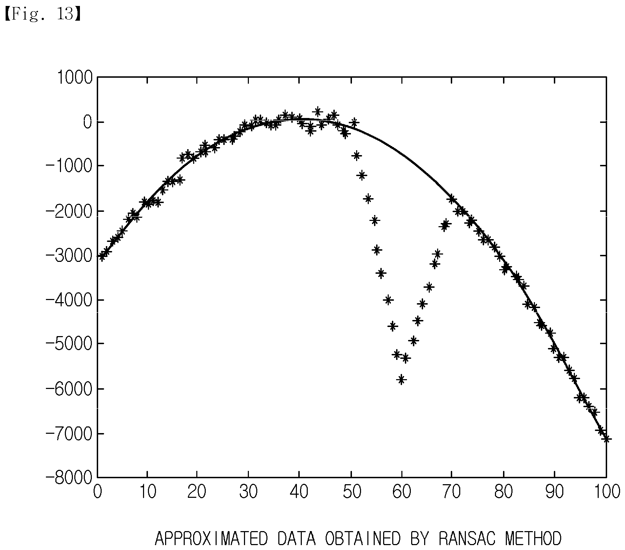

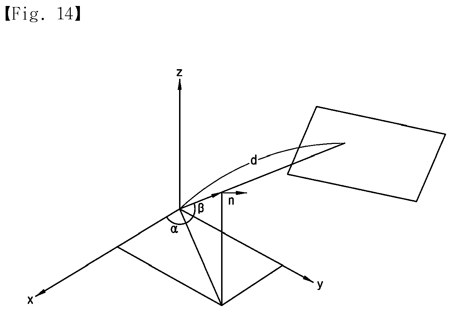

FIG. 11 is a graph illustrating actually measured data. FIG. 12 is a diagram illustrating an approximated result obtained by a minimum square method. FIG. 13 is a diagram illustrating an approximated result obtained by the RANSAC method. FIG. 14 is a diagram illustrating a plane determined by the RANSAC method.

The RANSAC method stands for a random sample consensus method and is a method of randomly selecting sample data and selecting data having a maximum consensus.

More specifically, several pieces of sample data are randomly selected, model parameters satisfying the several pieces of sample data are calculated, and the number of pieces of data located near each of the model parameters is calculated. When the number of the pieces of data is large, the model corresponding thereto is memorized. This process is repeatedly performed N times and a model with a highest coincidence rate is returned as a final result and expressed.

Although the least square method is more conveniently used than the RANSAC method, the least square method produces a desired result when the number of errors or the amount of noise contained in data is small but produces a result that does not match actual data as illustrated in FIG. 12 when the amount of noise contained in the data is large and thus the data is distorted as illustrated in FIG. 11. However, a desired result as illustrated in FIG. 13 may be obtained when the RANSAC method is used and then approximation is performed.

As illustrated in FIG. 14, extracting a plane includes creating an initial model thereof with respect to point cloud corresponding to segmented pixels, i.e., a set of segmented pixels, using the RANSAC method. Here, the plane may be represented with two angle parameters α and β representing a vector perpendicular to the plane and a vertical distance d from the origin of the plane.

Furthermore, in order to represent the plane, error models such as an angle or a distance, i.e., an error variance, may be used, and a Gaussian distribution of 3D points corresponding to a set of pixels used to obtain the plane may be used.

FIG. 15 is a diagram illustrating a method of sensing a moving obstacle according to another embodiment.

Referring to FIG. 15, an object C 330 is a static thing but is moved by an external force, and represents movement of a dog 360, i.e., movement of a dynamic obstacle.

Obstacles are not always static and thus dynamic obstacles should be also recognized. However, it is inefficient that obstacles moved by a small degree are recognized as new obstacles and obstacle sensing is performed again. Thus, as described above, a moving obstacle may be continuously tracked by grouping and labelling obstacles to be recognized as one obstacle. That is, in such a manner, even movement of a static object or a dynamic object may be recognized as an obstacle and thus obstacle recognition may be more conveniently and quickly performed.

FIGS. 16 and 17 are diagrams illustrating estimating a location of the moving robot 100. FIG. 16 is a diagram illustrating a case in which the moving robot 100 cannot obtain a 3D image. FIG. 17 is a diagram illustrating calculating second location information of the moving robot 100 using a particle method.

Referring to FIG. 8, the moving robot 100 estimates first location information of the moving robot 100 using an IMU and odometry, and calculates the second location information of the moving robot 100 using depth mage information obtained through the 3D depth sensor 210. Thus, the depth image information may be obtained from the 3D depth sensor 210 to calculate the second location information of the moving robot 100.

However, as illustrated in FIG. 16, the 3D depth sensor 210 may not always be capable of obtaining a 3D image. A range of sensing performed by the 3D depth sensor 210 is limited. Accordingly, in the case of FIG. 16, 3D image information of obstacles 330, 340, and 350 far from the moving robot 100 may not be obtained.

In this case, the first location information of the moving robot 100 cannot be corrected using depth image information and thus may be output as the second location information of the moving robot 100.

FIG. 18 is a diagram illustrating calculating second location information of the moving robot 100 on the basis of first location information of the moving robot 100 and using a particle filter method.

The second location information of the moving robot 100 is calculated by distributing particles around the first location information, calculating a matching score corresponding to each of the particles, and correcting a location of the moving robot 100 to a most probable location.

Since a probability-based filtering method is used for this correction, a Bayes filter may be generally used. The Bayes filter is a probability-based filter based on the Bayes theorem. In the Bayes theorem, a likelihood function and a prior probability distribution are used for a posterior probability.

A representative example of Bayes filter methods is a particle filter method. The particle filter method is a simulation method based on trials and errors and is also referred to as a sequential Monte Carlo (SMC) method.

A Monte Carlo method is a method of collecting a sufficiently large number of random input results and stochastically calculating a value of a function. In the Monte Carlo method, the features of the system are identified by stochastically calculating a value of a function.

Thus, as illustrated in FIG. 17, the moving robot 100 may calculate a more accurate location thereof, i.e., second location information thereof, by distributing many particles around the moving robot 100 during movement.

A method of sensing an obstacle and estimating a location of the moving robot 100, performed by the moving robot 100, has been described above. A method of creating and correcting a map, performed by the moving robot 100, will be described below.

When the second location information of the moving robot 100 is calculated, a map is created based on the calculated second location information, an obstacle area sensed by the obstacle sensor 300, and 3D image information obtained from the 3D image recognition sensor 210.

As described above, the moving robot 100 creates a map while excluding a region identified as an obstacle. Thus, information regarding an obstacle area need not be obtained and a map may be thus more efficiently created.

However, when creating and updating a map are performed in real time by the moving robot 100, an errors between the map and an actual map may occur. That is, map distortions may occur due to an odometer, a measuring instrument, etc. of the moving robot 100, thereby causing a difference between the map created by the moving robot 100 and an actual map. Such a map distortion is illustrated in FIG. 18.

Referring to FIG. 18, reference numeral 700 represents an actual map of an environment in which the moving robot 100 is moving. However, as described above, a map created by the moving robot 100 may be substantially the same as a map 710 or 720 due to errors occurring in measured data. Thus, when a path of movement of the moving robot 100 is planned on the basis of the created map, the path of movement is not accurate. Accordingly, such a map distortion should be corrected.

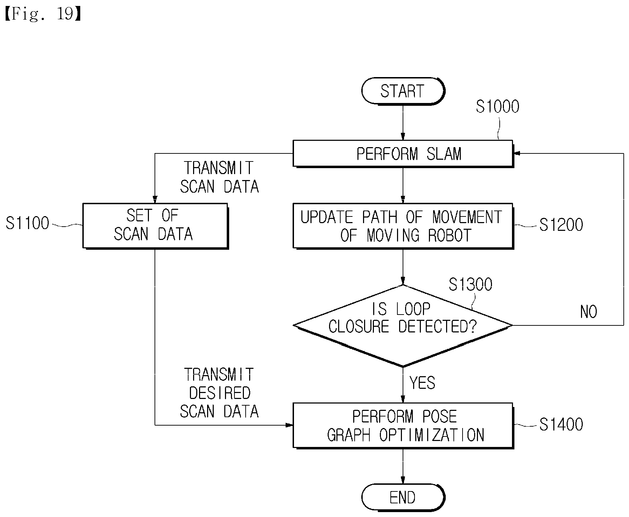

FIG. 19 is a flowchart of a method of correcting a map according to an embodiment of the present invention.

Referring to FIG. 19, the moving robot 100 performs SLAM in real time during movement (S1000). A result of performing SLAM is scanned and stored in a scan data storage unit (S1100), and at the same time, a path of movement of the moving robot 100 (pose graph) is updated (S1200). Here, the term "scan data" may be understood to mean geometric information obtained by scanning a region through which the moving robot 100 is moving.

The moving robot 100 detects whether a path of movement of the moving robot 100 is closed (loop closure) while analyzing a pose graph periodically updated as described above (S1300). Next, when the loop closure is detected, map correction (pose graph optimization) may be performed using the loop closure (S1400).

Here, the term "loop closure" may be understood to mean recognizing reliable initial location information of the moving robot 100 when the moving robot 100 moved by a certain degree and returned to an initial location, and may be also referred to as re-visiting or closing a loop.

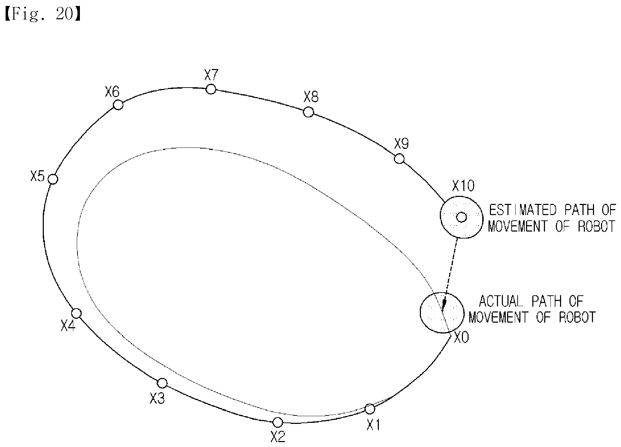

FIG. 20 is a diagram illustrating loop closure, in which an actual path of movement of the moving robot 100 and an estimated path of movement of the moving robot 100 are illustrated.

As illustrated in FIG. 20, the moving robot 100 starts to move at a point X0 and moves to a point XI, and finally, to a point X10 while updating a pose graph. However, as illustrated in FIG. 20, when the moving robot 100 moves a long distance and returns back, errors due to SLAM may occur and thus the moving robot 100 cannot return to the exact original position.

Thus, a map created by synthesizing initial location information of the moving robot 100 and location information thereof when the moving robot 100 re-visits a location near the initial location needs to be corrected. This process is referred to as pose graph optimization.

Loop closure may be detected by comparing information regarding feature points of images captured by a camera or by comparing previously stored scan data with newly input scan data using geometric information obtained by a sensor such as a laser sensor or an ultrasound sensor.

Alternatively, the loop closure may be detected through communication such as Wi-Fi or use of a docking station.

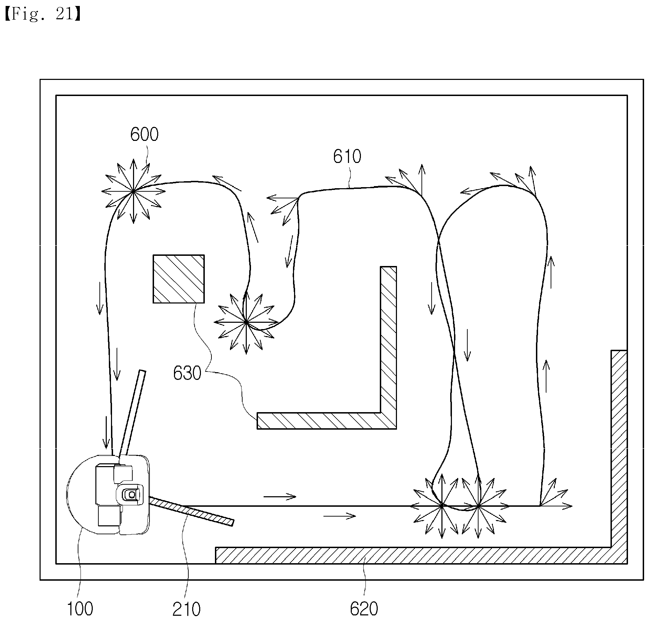

FIG. 21 is a diagram illustrating a final map obtained according to the present invention.

FIG. 21 illustrates a two-dimensional (2D) grid map but a 3D grid map may be created. A grid map is a map stochastically representing a probability that an object is located in each of grids when an image of surroundings of the moving robot 100 is divided into small grids, and is also referred to as a probability grid map.

Referring to FIG. 21, the moving robot 100 moves within a certain area while drawing a loop 610 and corrects a location thereof in real time while distributing particles 600, and obstacles 630 are detected by the obstacle sensor 300.

In FIG. 21, reference numeral 620 represents a region sensed as a wall by the 3D space recognition sensor 210, and the region 620 is actually a wall.

A technique for recognizing a location of a moving robot and creating a map according to the present invention has been described above. According to the present invention, sensing an obstacle, recognizing the location of the moving robot, creating a map, and planning a path of movement of the moving robot may be performed using a 3D image. Thus, since an additional map is not needed to create a map and a region identified as an obstacle is not used for SLAM, SLAM may be more quickly and exactly performed. Furthermore, an additional obstacle sensor is not needed and thus sensing various types of obstacles, performing SLAM, and planning a path may be performed using a 3D image.

In addition, in a 3D navigation system as described above, the precision of a map is improved and thus map-based robot services can be provided using the map, when compared to existing 2D systems.

## Claims

1. A moving robot (100) comprising:
- a capturing unit (200) configured to capture a three-dimensional (3D) image of surroundings of the moving robot (100), and extract depth image information of the captured 3D image;
- a location estimator (400) configured to estimate current location information of the moving robot (100) within an area,
- a controller (500) configured to calculate second location information of the moving robot (100) using the estimated current location information of the moving robot (100) and the extracted depth image information, and create a map,
**CHARACTERISED BY**
- the moving robot (100) further comprising an obstacle sensor configured to receive the 3D image from the capturing unit (200) and to sense, as obstacles, objects (310, 320, 330, 340, 350) having a height greater than that of a specific plane, by analysing information regarding the 3D image captured by the capturing unit (200);
- the location estimator (400) further being configured to estimate the current location information by excluding an obstacle area sensed by the obstacle sensor, using an inertia measurement unit and odometry; and
- the controller (500) further being configured to create the map while excluding the obstacle area sensed by the obstacle sensor.

2. The moving robot (100) of claim 1, wherein the specific plane comprises one of a lowermost part of the moving robot and a specific geometric plane set by a user.

3. The moving robot (100) of claim 1, wherein the specific plane is set by a random sample consensus (RANSAC) method.

4. The moving robot (100) of claim 1, wherein, when there is a moving obstacle among the sensed obstacles, the obstacle sensor tracks the sensed obstacles using a tracker.

5. The moving robot (100) of claim 1, wherein, when the depth image information of the 3D image is not extracted, the controller (500) sets the current location information of the moving robot as the second location information of the moving robot.

6. The moving robot (100) of claim 1, wherein the controller (500) calculates the second location information of the moving robot using the depth image information of the 3D image and a previously stored map.

7. The moving robot (100) of claim 6, wherein the controller (500) calculates the second location information of the moving robot from the current location information of the moving robot using a probability-based filtering method using a Bayes filter.

8. The moving robot (100) of claim 7, wherein the Bayes filter comprises at least one among a Kalman Filter, an extended Kalman filter (EKF), an unscented Kalman filter (UKF), an information filter, a histogram filter, and a particle filter.

9. The moving robot (100) of claim 1, wherein, when loop closure is detected from the second location information of the moving robot, the controller (500) corrects the map using the loop closure.

10. The moving robot (100) of claim 9, wherein the controller (500) senses the loop closure using at least one among Wi-Fi, 3D information, visual data, and a docking station.

11. The moving robot (100) of claim 1, wherein the controller (500) comprises a path planner configured to plan a path of movement of the moving robot on the basis of the second location information of the moving robot and the created map.

12. A method of controlling a moving robot (100), the method comprising:
- capturing (SI00) a three-dimensional (3D) image of surroundings of the moving robot (100), and extracting depth image information of the captured 3D image;
-- estimating (S300) current location information of the moving robot (100) within an area;
- calculating (S400) second location information of the moving robot (100) using the estimated current location information of the moving robot (100) and the extracted depth image information; and
- creating (S500) a map;
**CHARACTERISED BY**
the method further comprising.
- sensing (S200), as obstacles, objects (310, 320, 330, 340, 350) having a height greater than that of a specific plane, by analysing information regarding the 3D image captured by the capturing unit (200);
- estimating (S300) the current location information by excluding an obstacle area sensed by the obstacle sensor, using an inertia measurement unit and odometry; and
- creating (S500) a map while excluding the sensed obstacle area.

13. The method of claim 12, wherein the calculating (S400) of the second location information of the moving robot comprises calculating the second location information of the moving robot using the depth image information of the 3D image and a previously stored map.

14. The method of claim 12, wherein the creating (S500) of the map comprises, when loop closure is detected from the second location information of the moving robot, correcting (S600) the map using the loop closure.

## Patentansprüche

1. Mobiler Roboter (100), der Folgendes umfasst:
- eine Aufnehmeinheit (200), die konfiguriert ist zum Aufnehmen eines dreidimensionalen (3D) Bildes der Umgebung des mobilen Roboters (100) und zum Extrahieren von Tiefenbildinformationen des aufgenommenen 3D-Bildes;
- eine Standortschätzeinrichtung (400), die konfiguriert ist zum Schätzen von Informationen über den aktuellen Standort des mobilen Roboters (100) innerhalb eines Bereichs,
- eine Steuerung (500), die konfiguriert ist zum Berechnen von zweiten Informationen über den Standort des mobilen Roboters (100) unter Verwendung der geschätzten Informationen über den aktuellen Standort des mobilen Roboters (100) und unter Verwendung der extrahierten Tiefenbildinformationen, und zum Erzeugen einer Karte,
**DADURCH GEKENNZEICHNET, DASS**
- der mobile Roboter (100) weiterhin einen Hindernissensor umfasst, der konfiguriert ist zum Empfangen des 3D-Bildes von der Aufnehmeinheit (200) und zum Erkennen von Objekten (310, 320, 330, 340, 350) als Hindernisse, deren Höhe größer ist als die einer spezifischen Ebene, und zwar durch Analysieren von Informationen in Bezug auf das von der Aufnehmeinheit (200) aufgenommene 3D-Bild;
- die Standortschätzeinrichtung (400) weiterhin konfiguriert ist zum Schätzen der Informationen über den aktuellen Standort durch Ausschließen eines durch den Hindernissensor erkannten Hindernisbereichs, und zwar unter Verwendung einer Trägheitsmesseinheit und von Odometrie; und
- die Steuerung (500) weiterhin konfiguriert ist zum Erzeugen der Karte unter Ausschluss des durch den Hindernissensor erkannten Hindernisbereichs.

2. Mobiler Roboter (100) nach Anspruch 1, wobei die spezifische Ebene einen untersten Teil des mobilen Roboters oder eine von einem Benutzer eingestellte spezifische geometrische Ebene umfasst.

3. Mobiler Roboter (100) nach Anspruch 1, wobei die spezifische Ebene durch ein RANSAC-Algorithmusverfahren (Random Sample Consensus) eingestellt wird.

4. Mobiler Roboter (100) nach Anspruch 1, wobei, wenn sich unter den erkannten Hindernissen ein mobiles Hindernis befindet, der Hindernissensor die erkannten Hindernisse unter Verwendung eines Trackers nachverfolgt.

5. Mobiler Roboter (100) nach Anspruch 1, wobei, wenn die Tiefenbildinformationen des 3D-Bildes nicht extrahiert werden, die Steuerung (500) die Informationen über den aktuellen Standort des mobilen Roboters als die zweiten Informationen über den Standort des mobilen Roboters einstellt.

6. Mobiler Roboter (100) nach Anspruch 1, wobei die Steuerung (500) die zweiten Informationen über den Standort des mobilen Roboters unter Verwendung der Tiefenbildinformationen des 3D-Bildes und einer zuvor gespeicherten Karte berechnet.

7. Mobiler Roboter (100) nach Anspruch 6, wobei die Steuerung (500) die zweiten Informationen über den Standort des mobilen Roboters mittels eines wahrscheinlichkeitsbasierten Filterungsverfahrens unter Verwendung eines Bayes-Filters aus den Informationen über den aktuellen Standort des mobilen Roboters berechnet.

8. Mobiler Roboter (100) nach Anspruch 7, wobei der Bayes-Filter wenigstens einen der Folgenden umfasst: einen Kalman-Filter, einen erweiterten Kalman-Filter (EKF), einen Unscented Kalman-Filter (UKF), einen Informationsfilter, einen Histogrammfilter und einen Partikelfilter.

9. Mobiler Roboter (100) nach Anspruch 1, wobei, wenn aus den zweiten Informationen über den Standort des mobilen Roboters ein Schleifenverschluss erkannt wird, die Steuerung (500) die Karte unter Verwendung des Schleifenverschlusses korrigiert.

10. Mobiler Roboter (100) nach Anspruch 9, wobei die Steuerung (500) den Schleifenverschluss unter Verwendung wenigstens eines der Folgenden erkennt: Wi-Fi, 3D-Informationen, visuellen Daten und einer Dockingstation.

11. Mobiler Roboter (100) nach Anspruch 1, wobei die Steuerung (500) eine Bahnplanungseinrichtung umfasst, die konfiguriert ist zum Planen einer Bewegungsbahn des mobilen Roboters auf der Basis der zweiten Informationen über den Standort des mobilen Roboters und der erzeugten Karte.

12. Verfahren zur Steuerung eines mobilen Roboters (100), wobei das Verfahren Folgendes umfasst:
- Aufnehmen (S100) eines dreidimensionalen (3D) Bildes der Umgebung des mobilen Roboters (100) und Extrahieren von Tiefenbildinformationen des aufgenommenen 3D-Bildes;
- Schätzen (S300) von Informationen über den aktuellen Standort des mobilen Roboters (100) innerhalb eines Bereichs;
- Berechnen (S400) von zweiten Informationen über den Standort des mobilen Roboters (100) unter Verwendung der geschätzten Informationen über den aktuellen Standort des mobilen Roboters (100) und unter Verwendung der extrahierten Tiefenbildinformationen; und
- Erzeugen (S500) einer Karte;
**DADURCH GEKENNZEICHNET, DASS**
das Verfahren weiterhin Folgendes umfasst:
- Erkennen (S200) von Objekten (310, 320, 330, 340, 350) als Hindernisse, deren Höhe größer ist als die einer spezifischen Ebene, und zwar durch Analysieren von Informationen in Bezug auf das von der Aufnehmeinheit (200) aufgenommene 3D-Bild;
- Schätzen (S300) der Informationen über den aktuellen Standort durch Ausschließen eines durch den Hindernissensor erkannten Hindernisbereichs, und zwar unter Verwendung einer Trägheitsmesseinheit und von Odometrie; und
- Erzeugen (S500) einer Karte unter Ausschluss des erkannten Hindernisbereichs.

13. Verfahren nach Anspruch 12, wobei das Berechnen (S400) der zweiten Informationen über den Standort des mobilen Roboters Folgendes umfasst: Berechnen der zweiten Informationen über den Standort des mobilen Roboters unter Verwendung der Tiefenbildinformationen des 3D-Bildes und einer zuvor gespeicherten Karte.

14. Verfahren nach Anspruch 12, wobei das Erzeugen (S500) der Karte Folgendes umfasst:
wenn ein Schleifenverschluss aus den zweiten Informationen über den Standort des mobilen Roboters erkannt wurde, Korrigieren (S600) der Karte unter Verwendung des Schleifenverschlusses.

## Revendications

1. Robot mobile (100) comprenant :
- une unité de prise de vue (200) conçue pour capturer une image en trois dimensions (3D) de l'environnement du robot mobile (100), et pour extraire des informations d'image en profondeur concernant l'image 3D prise ;
- une unité d'estimation d'emplacement (400) conçue pour estimer des informations concernant l'emplacement effectif du robot mobile (100) dans un périmètre,
- un organe de commande (500) conçu pour calculer des deuxièmes informations d'emplacement du robot mobile (100) au moyen des informations estimées concernant l'emplacement effectif du robot mobile (100) et des informations d'image en profondeur extraites, et pour créer une carte,
**CARACTÉRISÉ EN CE QUE**
- le robot mobile (100) comprend en outre un détecteur d'obstacle conçu pour recevoir l'image 3D en provenance de l'unité de prise de vue (200) et pour détecter des obstacles consistant en des objets (310, 320, 330, 340, 350) dont la hauteur est supérieure à celle d'un plan spécifique, grâce à l'analyse d'informations concernant l'image 3D prise par l'unité de prise de vue (200) ;
- l'unité d'estimation d'emplacement (400) est conçue en outre pour estimer les informations concernant l'emplacement effectif en excluant une zone d'obstacle détectée par le détecteur d'obstacle, au moyen d'une unité de mesure d'inertie et d'un processus d'odométrie ; et
- l'organe de commande (500) est conçu en outre pour créer la carte en excluant la zone d'obstacle détectée par le détecteur d'obstacle.

2. Robot mobile (100) selon la revendication 1, dans lequel le plan spécifique comprend une partie inférieure extrême du robot mobile ou un plan géométrique spécifique établi par un utilisateur.

3. Robot mobile (100) selon la revendication 1, dans lequel le plan spécifique est établi par la méthode RANSAC (random sample consensus).

4. Robot mobile (100) selon la revendication 1, dans lequel, lorsqu'un obstacle mouvant se trouve parmi les obstacles détectés, le détecteur d'obstacle suit les obstacles détectés à l'aide d'un dispositif de suivi.

5. Robot mobile (100) selon la revendication 1, dans lequel, en cas d'absence d'extraction d'informations d'image en profondeur concernant l'image 3D, l'organe de commande (500) établit en tant que deuxièmes informations d'emplacement du robot mobile lesdites informations concernant l'emplacement effectif du robot mobile.

6. Robot mobile (100) selon la revendication 1, dans lequel l'organe de commande (500) calcule les deuxièmes informations d'emplacement du robot mobile au moyen des informations d'image en profondeur concernant l'image 3D et d'une carte précédemment mémorisée.

7. Robot mobile (100) selon la revendication 6, dans lequel l'organe de commande (500) calcule les deuxièmes informations d'emplacement du robot mobile à partir des informations concernant l'emplacement effectif du robot mobile au moyen d'un procédé de filtrage reposant sur les probabilités faisant appel à un filtre de Bayes.

8. Robot mobile (100) selon la revendication 7, dans lequel le filtre de Bayes comprend un filtre de Kalman, un filtre de Kalman étendu (EKF, extended Kalman filter), un filtre de Kalman sans biais (UKF, unscented Kalman filter), un filtre d'information, un filtre à histogramme et un filtre particulaire.

9. Robot mobile (100) selon la revendication 1, dans lequel, lorsqu'une fermeture de boucle est détectée à partir des deuxièmes informations d'emplacement du robot mobile, l'organe de commande (500) corrige la carte au moyen de la fermeture de boucle.

10. Robot mobile (100) selon la revendication 9, dans lequel l'organe de commande (500) détecte la fermeture de boucle en utilisant la Wi-Fi, des informations 3D, des données visuelles et/ou une station d'accueil.

11. Robot mobile (100) selon la revendication 1, dans lequel l'organe de commande (500) comprend une unité de prévision de trajectoire conçue pour prévoir la trajectoire du robot mobile compte tenu des deuxièmes informations d'emplacement du robot mobile et de la carte créée.

12. Procédé de commande d'un robot mobile (100), comprenant :
- la prise (S100) d'une image en trois dimensions (3D) de l'environnement du robot mobile (100), et l'extraction d'informations d'image en profondeur concernant l'image 3D prise,
- l'estimation (S300) d'informations concernant l'emplacement effectif du robot mobile (100) dans un périmètre,
- le calcul (S400) de deuxièmes informations d'emplacement du robot mobile (100) au moyen des informations estimées concernant l'emplacement effectif du robot mobile (100) et des informations d'image en profondeur extraites, et
- la création (S500) d'une carte ;
**CARACTÉRISÉ EN CE QUE**
le procédé comprend en outre :
- la détection (S200) d'obstacles consistant en des objets (310, 320, 330, 340, 350) dont la hauteur est supérieure à celle d'un plan spécifique, grâce à l'analyse d'informations concernant l'image 3D prise par l'unité de prise de vue (200),
- l'estimation (S300) d'informations concernant l'emplacement effectif en excluant une zone d'obstacle détectée par le détecteur d'obstacle, au moyen d'une unité de mesure d'inertie et d'un processus d'odométrie, et
- la création (S500) d'une carte excluant la zone d'obstacle détectée.

13. Procédé selon la revendication 12, dans lequel le calcul (S400) des deuxièmes informations d'emplacement du robot mobile comprend le calcul des deuxièmes informations d'emplacement du robot mobile au moyen des informations d'image en profondeur concernant l'image 3D et d'une carte précédemment mémorisée.

14. Procédé selon la revendication 12, dans lequel la création (S500) de la carte comprend, lorsqu'une fermeture de boucle est détectée à partir des deuxièmes informations d'emplacement du robot mobile, une correction (S600) de la carte au moyen de la fermeture de boucle.
